# EUROPÄISCHE PATENTSCHRIFT

(11) **EP 0 719 470 B1**
(45) Veröffentlichungstag und Bekanntmachung des Hinweises auf die Patenterteilung: **05.03.1997**
(21) Anmeldenummer: 94927545.7
(22) Anmeldetag: 02.09.1994
(51) Int. Cl.: H02K 5/14, H02K 5/22

(54) **KOLLEKTORMOTOR, INSBESONDERE DREHZAHLGEREGELTER EINPHASEN-REIHENSCHLUSSMOTOR FÜR EINEN WASCHAUTOMATENANTRIEB**
COLLECTOR MOTOR, ESPECIALLY A CONTROLLED-SPEED SINGLE-PHASE SERIES-WOUND MOTOR FOR A WASHING MACHINE DRIVE
MOTEUR A COLLECTEUR, NOTAMMENT MOTEUR-SERIE MONOPHASE A VITESSE REGULEE POUR SYSTEME D'ENTRAINEMENT DE LAVEUSE AUTOMATIQUE

(30) Priorität: 15.09.1993 EP 93114881
(43) Veröffentlichungstag der Anmeldung: 03.07.1996
(73) Patentinhaber: SIEMENS AKTIENGESELLSCHAFT, 80333 München (DE)
(72) Erfinder: BORMANN, Jürgen, D-97228 Rottendorf (DE)
(86) Internationale Anmeldenummer: EP9402924
(87) Internationale Veröffentlichungsnummer: WO9508208

(56) Entgegenhaltungen:
- EP-A- 0 175 992
- DE-A- 3 123 517
- DE-U- 8 520 258
- FR-A- 2 605 154
- GB-A- 2 228 373
- PATENT ABSTRACTS OF JAPAN vol. 008 no. 017 (E-223) ,25.Januar 1984 & JP,A,58 179145 (HITACHI SEISAKUSHO) 20.Oktober 1983,

## Beschreibung

Die Erfindung bezieht sich auf einen Kollektormotor, insbesondere einen drehzahlgeregelten Einphasen-Reihenschlußmotor für einen Waschautomatenantrieb gemäß Oberbegriff des Anpruchs 1; eine derartiger Antrieb ist durch die DE-C2-35 13 155 bekannt.

Im bekannten Fall ist zur Verminderung des Aufwandes für die innere Verdrahtung des Kollektormotors und zur Verbesserung der Betriebssicherheit an der inneren Stirnseite des kollektorseitigen Lagerschildes eine Leiterplatte mit aufgedruckten Schaltverbindungen befestigt, die zum Betrieb des Elektromotors dienende Bauelemente und Schaltverbindungen trägt, die einerseits mit äußeren Anschlußleitungen verbindbar und andererseits mit von der Statormotorwicklung kommenden Leitern kontaktierbar sind, die in Kanälen von bis in die Ebene der Leiterplatte vorgezogenen Polnutverschlußkeilen zu dieser geführt sind.

Durch die DE-A-3 123 517 ist ein Kollektormotor mit einem stegartigen, über seine gesamte axiale Länge kontinuierlich verlaufenden Lagerträger bekannt, wobei in den großen Freiräumen zwischen den Stegen ein Träger aus Isolierstoff für elektrische Bauteile eingeschoben und ohne Verbindung zum Lagerträger am Motorgehäuse gehaltert ist.

Der Erfindung liegt die Aufgabe zugrunde, mit einfachen, insbesondere für eine Automatenfertigung vorteilhaften montagetechnischen Mitteln einen unterschiedlichen Betriebsbzw. Anschlußbedingungen leicht anpaßbaren, lange Betriebsstandzeiten gewährleisteten Kollektormotor zu schaffen; die Lösung dieser Aufgabe gelingt ausgehend von einem Kollektormotor der eingangs genannten Art durch die kennzeichnende der Lehre des Anspruchs 1; vorteilhafte Ausgestaltungen der Erfindung sind jeweils Gegenstand der Unteransprüche.

Durch die außen am Lagerschild anbringbare und zumindest teilweise den Lagerhals umgreifende Trägerplatte ist deren einfache Montage und Ausrichtung bei der Erstfertigung sowie Auswechselbarkeit im Reparaturfall bei ansonsten komplettiertem Motor möglich, wobei für die mit dem Kollektor kontaktierenden Bürsten der gesamte radial zur Verfügung stehende Einbauraum ohne Einschränkung durch umgebende Wandungen des Lagerschildes und bei gleichzeitiger guter Kühlbarkeit zur Verfügung steht. Durch das Montagerohr ist nicht nur eine sichere isolierte Durchführung von elektrischen Kontakten durch das vorzugsweise aus Metall gegossene Lagerschild sondern eine einfache Ausrichtung der Trägerplatte relativ zur Statorwicklung und damit zwischen der Bürstenachse einerseits und der Polachse der Statorwicklung andererseits möglich, wenn in vorteilhafter Weise das Montagerohr im Sinne einer gegenseitigen Ausrichtungsmöglichkeit auf eine Halterung für statorwicklungsseitige Kontaktierungsmittel aufsteckbar ist, die, vorzugsweise einstückig, an einer radial flexiblen, jedoch in Umfangsrichtung steifen Wicklungsträger-Stegverbindung fixiert sind, die ihrerseits die Wicklung aufnehmende, isolierende Wicklungsträger verbindet. Durch die radiale Einformung des Lagerhalses ergeben sich seitlich des Lagerhalses außerdem Auflage- bzw. Fixierungsflächen, auf denen die Trägerplatte im Sinne eines möglichst guten Wärmeüberganges großflächig aufliegbar und fixierbar ist.

Durch Anordnung des Kollektors des Kollektormotors in dem Lagerhalsbereich, der sich unmittelbar an den Auflagebereich der Trägerplatte anschließt, ergeben sich in vorteilhafter Weise kurze Kontaktwege zwischen der Trägerplatte einerseits und der Statorwicklung andererseits.

Im Sinne einer automatengerechten Montage sind in Ausgestaltung der Erfindung die aufgrund der Lagerhalsausbildung gut zugänglichen Aufnahmen für die Bürsten einstückig mit der Trägerplatte aus Kunststoff spritzgegossen und U-förmig mit axialen Aufnahme-Öffnungen derart versehen, daß Bürstenkasten unter elastischer Eigenpressung eindrückbar und dadurch fixierbar sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem Schnittbild gemäß Schnittverlauf I-I in FIG 2 das kollektorseitige Ende eines Kollektormotors ohne montierte Trägerplatte,
- FIG 2: die axiale Draufsicht auf den Kollektormotor gemäß FIG 1,
- FIG 3: im Schnittverlauf III-III gemäß FIG 4 das kollektorseitigen axiale Ende eines Kollektormotors mit montierter Trägerplatte,
- FIG 4: die axiale Draufsicht auf des kollektorseitige Ende eines Kollektormotors gemäß FIG 3,
- FIG 5: die Seitenansicht des kollektorseitigen Endes eines Kollektormotors gemäß FIG 4 mit teilweise aufgebrochenem Lagerschild und teilweise aufgebrochener, an der Trägerplatte gehaltener Kontaktierungs-Steckvorrichtung,
- FIG 6: die Seitenansicht eines äußeren, zur Steckkontaktierung mit der Kontaktierungs-Steckvorrichtung gemäß FIG 5 vorgesehenen Anschlußsteckers,
- FIG 7: den Anschlußstecker gemäß FIG 6 im Schnittverlauf VII-VII,
- FIG 8: den Anschlußstecker gemäß FIG 6 in Steckverbindung mit der Kontaktierungs-Steckvorrichtung an der Trägerplatte und an der Wicklungsträger-Kontaktierungsvorrichtung,
- FIG 9: die Seitendraufsicht auf die Kontaktierung gemäß FIG 8 mit teilweise aufgebrochener Trägerplatte,
- FIG 10: einen elastisch verformbaren, axial in eine Aufnahmeöffnung der Trägerplatte durch Einpressung fixierbaren Bürstenkasten,
- FIG 11: im Schnittbild die auf dem Lagerschild aufliegende Trägerplatte im Bereich einer Aufnahmeöffnung für einen einpreßbaren Bürstenkasten.

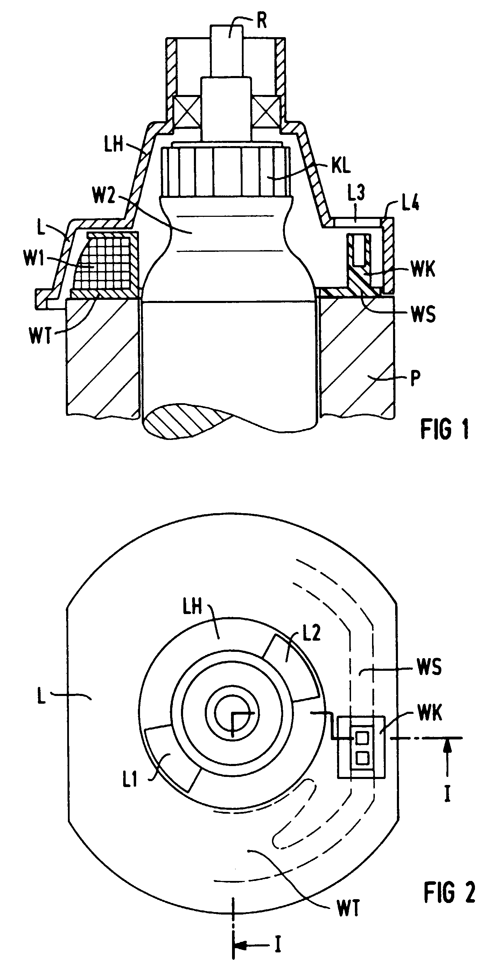

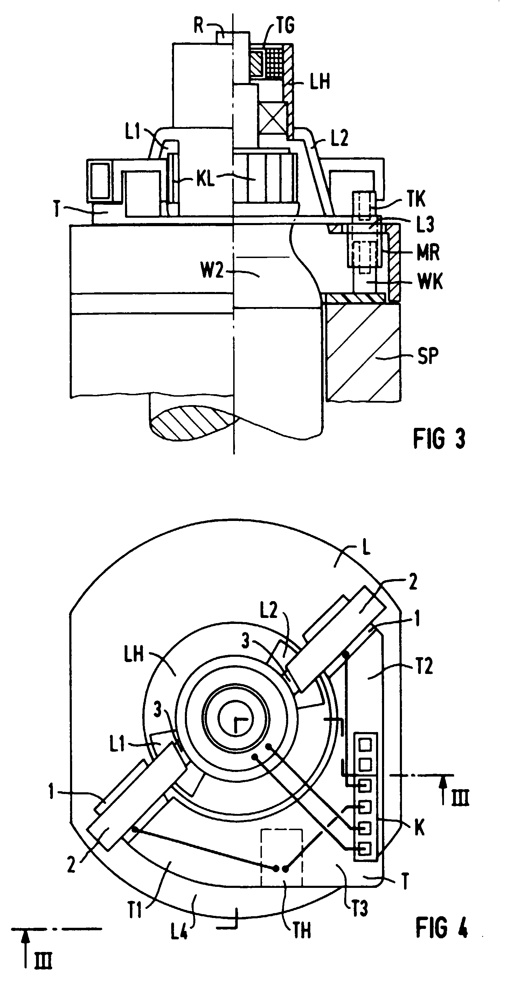

FIG 1,2 zeigen im axialen Schnitt bzw. in stirnseitiger Draufsicht das kollektorseitige Ende eines Kollektormotors. Auf die Stirnseite eines Statorpaketes P ist ein Lagerschild L aufgesetzt, das sich zum lagerseitigen Ende zu einem Lagerhals LH derart verjüngt, daß zwischen der Randauflage auf dem Statorblechpaket P und dem Lagerhals LH eine Auflagefläche entsteht, auf die - wie anhand von FIG 3,4 später erläutert - von außen eine Trägerplatte T auflegbar und fixierbar ist. Ausgehend von der Auflagefläche verjüngt sich der Lagerhals LH in einem ersten, einen Kollektor KL überdeckenden Bereich und setzt sich fort in einem, u.a. die Lagerung einer Rotorwelle R übernehmenden Bereich. Die Rotorwelle R trägt neben dem Kollektor KL ein mit einer Rotorwicklung W2 versehenes Rotorpaket. Eine im Statorpaket P untergebrachte Statorwicklung W1 ist auf einen Kunststoff-Wicklungsträger WT aufgewickelt, dessen polseitige Wicklungsträger der hier angedeuteten zweipoligen Wicklung einstückig durch Wicklungsträger-Stegverbindungen WS verbunden sind, die radial eine gewisse Flexibilität jedoch in Umfangsrichtung eine große Steifigkeit aufweisen. Von zumindest einem der Wicklungsträger-Stegverbindungen WS wird eine Statorwicklungs-Kontaktierungsvorrichtung WK aufgenommen, die vorzugsweise einstückig mit dem Wicklungsträger WT und den Wicklungsträger-Stegverbindungen WS aus Kunststoff gespritzt ist und die im Sinne eines Terminals zur Aufnahme bzw. Kontaktierung der Wicklungdrähte der Statorwicklung W1 mit äußeren Versorgungsleitungen - wie im folgenden anhand der weiteren Figuren beschrieben - dient und die durch eine Öffnung L3 in der Aufnahmefläche des Lagerschildes L durchführbar ist.

Die auf die Aufnahmefläche des Lagerschildes L von außen, vorzugsweise in axialer Richtung zuführbare gegebenenfalls mittels Zentrierzapfen 1.2 vorausrichtbare und montierbare Trägerplatte T dient im wesentlichen zur Aufnahme von elektrischen Bauelementen, wie z.B. von mit dem Kollektor KL kontaktierenden Bürsten 3;3 bzw. einem Thermowächter TH sowie zur Aufnahme von Kontaktierungs- und Verbindungselementen zwischen einerseits äußeren und andererseits statorbzw. rotorseitgen inneren elektrischen Anschlüssen. Für einen derartigen Anschluß dienen insbesondere eine Kontaktierungs-Steckvorrichtung K sowie ein Montagerohr MR; sowohl die Halterung für die Kontaktierungs-Steckvorrichtung K als auch das Montagerohr MR sind vorzugsweise einstückig an die Trägerplatte T, insbesondere im Bereich des Mittelschenkels T3, in Reihenanordnung angespritzt.

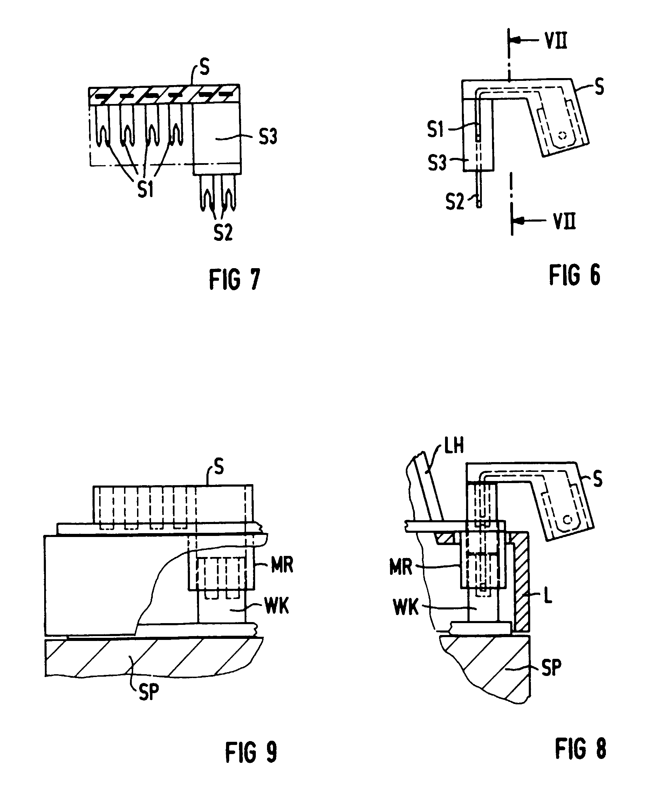

Sowohl die statorwicklungseitige Kontaktierungs-Vorrichtung WK als auch die Kontaktierungs-Steckvorrichtung K weisen Halterungen für Aufnahmetaschen auf, in die in Schneidklemmtechnik einerseits elektrische Verbindungsleitungen einbringbar, fixierbar und kontaktierbar sind und andererseits Steckkontaktierungsmittel zum gegenseitigen Kontaktieren eines äußeren - in FIG 6-8 näher erläuterten - Anschlußsteckers S einsteckbar sind.

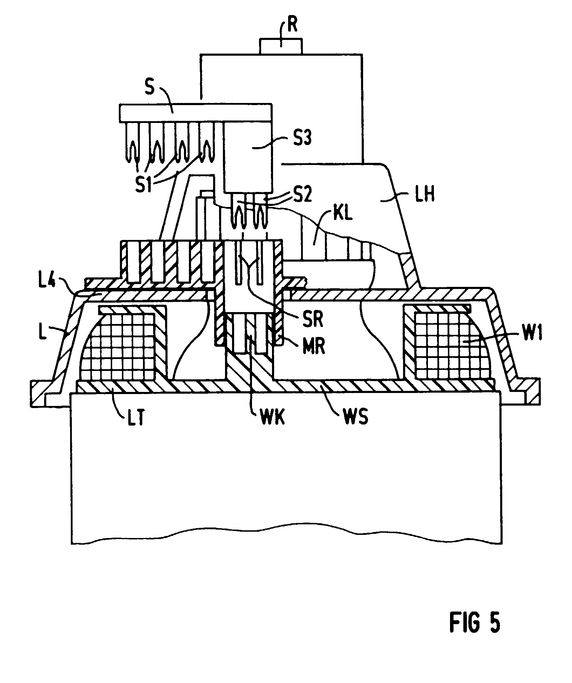

Wie insbesondere aus FIG 3 und insbesondere FIG 5 ersichtlich, ist das an der Trägerplatte T fixierte Montagerohr MR passungsgenau auf die am Wicklungsträger-Verbindungssteg VS fixierte Aufnahme für die statorwicklungsseitige Kontaktierungs-Vorrichtung WK aufsteckbar, wobei bei der Aufsteck-Montagebewegung einerseits durch eine vorzugsweise radiale Flexibilität des Wicklungsträger-Verbindungssteges VS eine Ausrichtung der Halterung der statorwicklungsseitigen Kontaktierungs-Vorrichtung WK relativ zum Montagerohr MR möglich ist jedoch andererseits durch die Steifigkeit des Wicklungsträger-Verbindungssteges VS in Umfangsrichtung eine Ausrichtung des Montagerohres MR und damit der Trägerplatte T und gegebenenfalls des damit vorfixierten Lagerschildes L zum Wicklungsträger WT und damit zur Statorwicklung W1 derart erfolgt, daß ein vorgeschriebener Winkel der Bürstenachse der auf der Trägerplatte T befestigten Aufnahme-Öffnung 1;1 für die Bürsten 3 zur Polachse der Statorwicklung W1 gewährleistet ist.

Die Kontaktierungs-Steckvorrichtung K weist Kontaktierungstaschen zur Aufnahme von Verbindungsleitungen zu den Bürsten, gegebenenfalls über einen Thermowächter TH, als auch zu einem drehzahlüberwachenden bzw. drehzahlmessenden Tachogenerator TG auf, der in vorteilhafter Weise axial außen leicht montierbar bzw. demontierbar im Lagerhals LH angeordnet ist. In Reihe mit den die Verbindungsleitung aufnehmenden Taschen der Kontaktierungs-Steckvorrichtung K ist das Montagerohr MR angeformt, derart daß ein - in FIG 6-8 näher dargestellter - äußerer Anschlußstecker S als einstückige längsgerichtete Bauteileinheit beim Zuführen zu der Leiterplattte T sowohl die Verbindungsleitungen in der Ebene der Trägerplatte T als auch die darunterliegenden statorwicklungsseitigen Kontaktierungs-Vorrichtung WK kontaktieren kann und dabei durch Führungsanlage einer Stekkerzentrierung S3 an der Innenfläche des dazu zweckmäßigerweise mit Schaberippen SR versehenen Montagerohrs MR ausgerichtet wird; dazu weist der äußere Anschlußstecker S - wie insbesondere aus FIG 7-9 ersichtlich - eine erste Steckkontaktierungsebene S1 im Bereich der Lagerschildauflage der Trägerplatte T und eine zweite Steckkontaktierungsebene S2 im Bereich des Wicklungsträger WT mit oberhalb liegender Steckerzentrierung S3 auf.

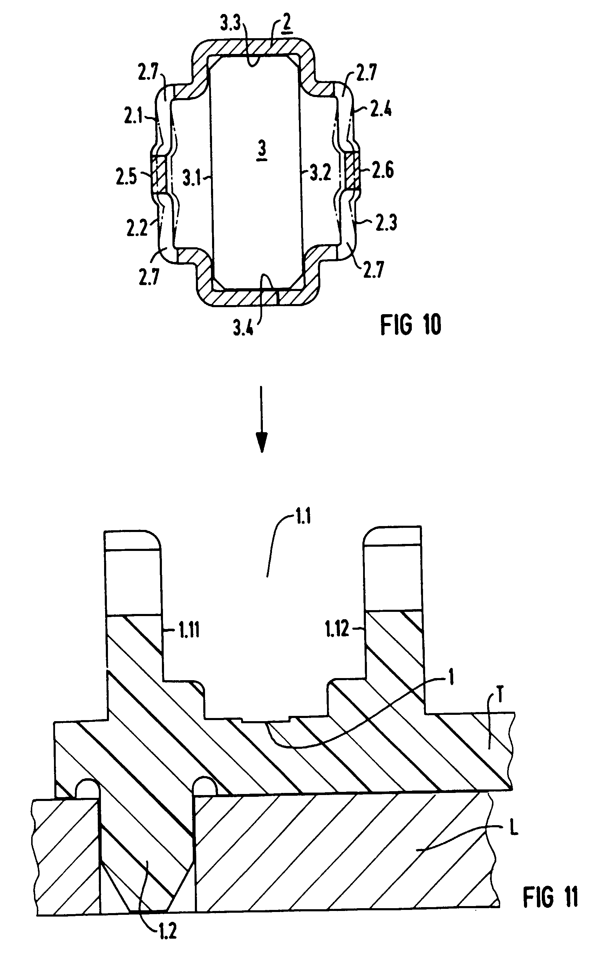

Im Sinne einer automatengerechten Montage sind zur vorteilhaften axialen Zuführbarkeit und Montierbarkeit der Bürsten 3;3 die Aufnahmen 1 der Trägerplatte T U-förmig mit einer nach axial außen gerichteten Aufnahme-Öffnung 1.1 für einen entlang des Lagerhalses LH zuführbaren und unter elastischer Eigenverformung in die Aufnahme-Öffnung 1.1 einpreßbaren Bürstenkastens 2 ausgebildet; dazu ist der Bürstenkasten 2 gemäß mit FIG 10 zur innerhalb geführten Bürste 3 beabstandeten, jedoch an Andruckflächen 1.11;1.12 der Aufnahme 1 andrückbaren Andruckflächen-Absätzen 2.5;2.6 versehen, derart daß der Bürstenkasten 2 ohne Beeinträchtigung der Führung der Bürste 3 in die Aufnahme-Öffnung 1.1 der Aufnahme 1 im Preßsitz selbsthaltend eindrückabr ist; die Andruckflächen-Absätze 2.5;2.6 des Bürstenkastens 2 sind mit einer entsprechenden Übermaß-Passung relativ zur Weite der Aufnahme-Öffnung 1.1 der Bürstenplatte 1 herausgeformt. Die Größe der Preßkraft wird im wesentlichen durch das Übermaß der Passung und das Widerstandsmoment des Blechquerschnittes des Bürstenkastens 2 bestimmt, für dessen elastische Verformbarkeit zweckmäßigerweise oberhalb und unterhalb der Andruckflächen-Absätze 2.5;2.6 elastische Absätze 2.1-2.4 in den gegenüberliegenden Seitenflächen des Bürstenkastens 2 vorgesehen sind.

Fertigungstechnisch besonders einfach werden die elastischen Absätze 2.1-2.4 bei der Herstellung des Bürstenkastens 2 durch Schwachstellen in Form von ausgestanzten Durchbrechungen 2.7 erreicht; dabei liegen die ausgestanzten Schwachstellen vorzugsweise im Bereich zwischen den Andruckflächen-Absätzen 2.5;2.6 einerseits und dem übrigen, insbesondere zur Führung der Längsseitenflächen 3.1;3.2 der Bürste 3 dienenden Teil des Bürstenkastens 2; im Bereich der schmaleren Querseitenflächen 3.3;3.4 liegt der Bürstenkasten im wesentlich über die gesamte Fläche mit Führungsspiel an.

Der Bürstenkasten 2 ist als Stanzbiegeteil aus einem Blech gestanzt und zu einem geschlossenen Kasten gerollt, dessen Längskanten im Bereich der einen Quer-Seitenflächen 3.4 der Bürste 3 voreinanderliegen und vorzugsweise durch schwalbenschwanzartige Verbindungen miteinander verklinkt sind.

Es dürfte ersichtlich sein, daß die derart vorteilhafte Ausgestaltung der Bürstenkästen die elastische Verformung des Blechquerschnittes die Bürstenführung der Bürste 3 in dem Bürstenkasten 2 unbeeinflußt bleibt und somit ein hinreichendes Bürstenspiel zur Führung der Bürste gewährleistet ist.

## Patentansprüche

1. Kollektormotor, insbesondere drehzahlgeregelter Einphasen-Reihenschlußmotor für einen Waschautomatenantrieb, mit am kollektorseitigen Lagerschild (L) senkrecht zur Motorachsrichtung gehaltener elektrisch isolierender Trägerplatte (T) zur Aufnahme von elektrischen Bauelementen bzw. Kontaktierungs- und Verbindungselementen zwischen einerseits äußeren und andererseits stator- bzw. rotorseitigen inneren elektrischen Anschlüssen, **gekennzeichnet durch** ein Lagerschild mit einem gegenüber dessen Auflage am Statorpaket (P) stufenförmig abgesetzten, axial vorstehenden Lagerschild-Lagerhals (LH) und eine den Lagerschild-Lagerhals (LH) zumindest teilweise umgreifende, an dem Lagerschild-Absatz (L4) im Übergang zum Lagerschild-Hals (LH) axial außen fixierbare Trägerplatte (T) mit bei deren axialer Zuführung durch Öffnungen (L1,L2;L3) des Lagerschild-Halses (LH) bzw. des Lagerschildes (L) durchsteckbaren Bürsten (3;3) zur Kontaktierung mit dem Kollektor (KL) sowie Montagerohr (MR) zur Kontaktierung mit der Statorwicklung (W1).

2. Kollektormotor nach Anspruch 1, **gekennzeichnet durch** eine Anordnung des Kollektors (KL) des Kollektormotors innerhalb eines ersten Bereiches des Lagerhalses (LH) im Anschluß an den Lagerschild-Absatz (2.4).

3. Kollektormotor nach Anspruch 1 oder 2, **gekennzeichnet durch** eine im wesentlichen U-förmige bzw. V-förmige Trägerplatte (T) mit an ihren freien Seitenschenkeln (T1;T2) gehaltenen Aufnahmen (1;1) für die Bürsten (3;3) und einer dazwischen liegenden Kontaktierungs-Steckvorrichtung (K).

4. Kollektormotor nach Anspruch 3, **gekennzeichnet durch** eine mit der Trägerplatte (T) einstückige, vorzugsweise gespritzte, Halterung für die Kontaktierungs-Steckvorrichtung (K).

5. Kollektormotor nach einem der Ansprüche 1-4, **gekennzeichnet durch** ein an die Trägerplatte (T) angeformtes, axial durch eine Öffnung (L3) des Lagerschildes (L) ragendes Montagerohr (MR) zur Kontaktierung mit einer statorwicklungsseitigen Kontaktierungs-Vorrichtung (WK).

6. Kollektormotor nach Anspruch 5, **gekennzeichnet durch** eine, vorzugsweise einstückige, Halterung der statorwicklungsseitigen Kontaktierungs-Vorrichtung (WK) an einer Wicklungsträger-Stegverbindung (WS) zwischen benachbarten, die Wicklung (W1) des Rotors aufnehmenden Wicklungsträgern (WT).

7. Kollektormotor nach Anspruch 6, **gekennzeichnet durch** eine im Sinne einer gegenseitigen Ausrichtungsmöglichkeit zwischen dem Montagerohr (MR) einerseits und der Halterung der statorwicklungsseitigen Kontaktierungs-Vorrichtung (WK) radial flexible, in Umfangsrichtung jedoch steife Ausbildung der Wicklungsträger-Stegverbindung (WS).

8. Kollektormotor nach einem der Ansprüche 4-7, **gekennzeichnet durch** Kontaktierungsmittel mit Aufnahmetaschen für in Schneidklemmtechnik fixierbare elektrische Verbindungsleitungen und Steckkontaktierungsmitteln zum gegenseitigen Kontaktieren mit einem äußeren Anschlußstecker (S).

9. Kollektormotor nach einem der Ansprüche 4-8, **gekennzeichnet durch** eine Kontaktierungs-vorrichtung (K) bzw. einen damit in Steckkontakt bringbaren äußeren Anschlußstecker (S) mit einer ersten Steckkontaktierungsebene (S1) im Bereich der Lagerschildauflage der Trägerplatte (T) und einer zweiten Steckkontaktierungsebene (S2) im Bereich des Wicklungsträgers (WT) mit darüberliegender Steckzentrierung (S3) an dem Montagerohr (MR).

10. Kollektromotor nach einem der Ansprüche 1-9, **gekennzeichnet durch** eine zumindest im Bereich der Aufnahmen (1;1) für die Bürsten (3;3) großflächigen Anlage der Trägerplatte (T) an dem Lagerschild (L).

11. Kollektormotor nach einem der Ansprüche 1-10, **gekennzeichnet durch** eine Drehzahlerfassungsvorrichtung (TG) im Bereich des axial freien Ende des Lagerhalses (LH).

12. Kollektormotor nach einem der Ansprüche 1-11, **gekennzeichnet durch** eine mit der Trägerplatte (T) einstückige U-förmige, nach axial außen gerichtete Aufnahme-Öffnung (1.1) für einen entlang des Lagerhalses (LH) zuführbaren und unter elastischer Eigen-Verformung in die Aufnahme-Öffnung (1.1) einpreßbaren Bürstenkasten (2).

13. Kollektromotor nach Anspruch 12, **gekennzeichnet durch** einen Bürstenkasten (2) mit zur geführten Bürste (3) beabstandeten, jedoch an Andruckflächen (1.11;1.12) der Aufnahme (1) andrückbaren Andruckflächen-Absätzen (2.5;2.6), derart daß der Bürstenkasten (2) ohne Beeinträchtigung der Führung der Bürste (3) in die Aufnahme (1) im Preßsitz selbsthaltend eindrückbar ist.

## Claims

1. Commutator motor, in particular rotational speed-regulated single-phase series-wound motor for an automatic washing machine drive, having an electrically insulating carrier board (T), which is held on the commutator-side end shield (L) perpendicular to the axial direction of the motor, for receiving electrical components and/or contact-making and connecting elements between, on the one hand, external and, on the other hand, stator- and/or rotor-side internal electrical connections, characterized by an end shield having an axially protruding end shield bearing neck (LH), which is offset in a stepped manner with respect to the support of said end shield on the stator core (P), and by a carrier board (T), which reaches at least partially around the end shield bearing neck (LH) and can be axially externally fixed on the end shield shoulder (L4) where it merges with the end shield neck (LH), having brushes (3; 3) for making contact with the commutator (KL), which brushes, given axial admission of said carrier board, can be inserted through openings (L1, L2; L3) in the end shield neck (LH) and in the end shield (L), respectively, and also having an assembly tube (MR) for making contact with the stator winding (W1).

2. Commutator motor according to Claim 1, characterized by an arrangement of the commutator (KL) of the commutator motor within a first region of the bearing neck (LH) following the end shield shoulder (2.4).

3. Commutator motor according to Claim 1 or 2, characterized by an essentially U-shaped or V-shaped carrier board (T) having receptacles (1; 1) for the brushes (3; 3), which receptacles are held on the free side limbs (T1; T2) of said carrier board, and having a contact-making plug device (K) situated in between.

4. Commutator motor according to Claim 3, characterized by a retenial for the contact-making plug device (K), which retention is integral, preferably injection-moulded, with the carrier board (T).

5. Commutator motor according to one of Claims 1-4, characterized by an assembly tube (MR) for making contact with a stator winding-side contact-making device (WK), which assembly tube is integrally formed on the carrier board (T) and projects axially through an opening (L3) in the end shield (L).

6. Commutator motor according to Claim 5, characterized by a, preferably integral, retention of the stator winding-side contact-making device (WK) on a winding carrier web connection (WS) between adjacent winding carriers (WT) holding the winding (W1) of the rotor.

7. Commutator motor according to Claim 6, characterized by a radially flexible, but peripherally stiff design of the winding carrier web connection (WS), in the sense of a mutual alignment possibility between the assembly tube (MR), on the one hand, and the retention of the stator winding-side contact-making device (WK).

8. Commutator motor according to one of Claims 4-7, characterized by contact-making means having receiving pockets for electrical connecting leads, which can be fixed using insulation piercing terminal technology, and having plug-in contact-making means for reciprocal contact-making with an external connection plug (S).

9. Commutator motor according to one of Claims 4-8, characterized by a contact-making device (K) and an external connection plug (S) which can be brought into plug contact therewith, having a first plug-in contact-making plane (S1) in the region of the end shield support of the carrier board (T) and a second plug-in contact-making plane (S2) in the region of the winding carrier (WT) with superior plug centring (S3) on the assembly tube (MR).

10. Commutator motor according to one of Claims 1-9, characterized by large-area bearing of the carrier board (T) on the end shield (L), at least in the region of the receptacles (1; 1) for the brushes (3; 3).

11. Commutator motor according to one of Claims 1-10, characterized by a rotational speed detection device (TG) in the region of the axially free end of the bearing neck (LH).

12. Commutator motor according to one of Claims 1-11, characterized by a U-shaped receiving opening (1.1), which is integral with the carrier board (T) and is directed axially outwards, for a brush box (2) which can be admitted along the bearing neck (LH) and can be pressed into the receiving opening (1.1) with intrinsic elastic deformation.

13. Commutator motor according to Claim 12, characterized by a brush box (2) having press-on surface shoulders (2.5; 2.6), which are at a distance from the guided brush (3) but can be pressed against press-on surfaces (1.11; 1.12) of the receptacle (1), such that the brush box (2) can be pressed with a self-holding press fit into the receptacle (1) without impairing the guidance of the brush (3).

## Revendications

1. Moteur à collecteur, notamment moteur-série monophasé à vitesse régulée pour un dispositif d'entraînement de machine à laver automatique, comportant une plaque (T) de support isolée électriquement et maintenue perpendiculaire à l'axe du moteur sur un flasque (L) du côté du collecteur, destinée à recevoir des éléments constitutifs électriques et des éléments de contact et de connexion entre, d'une part, des raccords électriques extérieurs, et, d'autre part, des raccords électriques intérieurs du côté du rotor ou du côté du stator, caractérisé par un flasque comportant un tourillon (LH) de flasque faisant saillie axialement et décalé en forme de marche par rapport à la pièce d'appui du flasque sur le paquet statorique et une plaque (T) de support entourant au moins en partie le tourillon (LH) de flasque et pouvant être immobilisée à l'extérieur axialement sur le gradin (L4) de flasque à la transition avec le tourillon (LH) de flasque, cette plaque (T) de support comportant des balais (3;3) pouvant être enfichés par traversée en les amenant axialement dans des ouvertures (L1, L2; L3) du tourillon (LH) de flasque ou du flasque (L) afin d'établir un contact avec le collecteur (KL) ainsi qu'un conduit (MR) de montage pour établir un contact avec l'enroulement (W1) de stator.

2. Moteur à collecteur suivant la revendication 1, caractérisé par un agencement du collecteur (KL) du moteur à collecteur à l'intérieur d'une première région du tourillon (LH) de flasque en liaison avec le gradin (2.4) de flasque.

3. Moteur à collecteur suivant la revendication 1 ou 2, caractérisé par une plaque (T) de support sensiblement en forme de U ou en forme de V comportant des logements (1;1) maintenus à ses branches (T1; T2) latérales libres pour recevoir les balais (3.3) et un dispositif (K) d'enfichage de contact se trouvant entre eux.

4. Moteur à collecteur suivant la revendication 3, caractérisé par un support pour le dispositif (K) d'enfichage de contact, d'une pièce avec la plaque (T) de support, de préférence moulé par injection.

5. Moteur à collecteur suivant l'une des revendications 1 à 4 caractérisé par un conduit (MR) de montage faisant saillie par une ouverture (L3) du flasque (L) et issu de la plaque (T) de support, destiné à établir un contact avec un dispositif (WK) de contact du côté de l'enroulement de stator.

6. Moteur à collecteur suivant la revendication 5, caractérisé par une fixation de préférence d'une pièce, du dispositif (WK) de contact du côté de l'enroulement de stator à un dispositif (WS) de raccord d'âme support d'enroulement disposé entre deux supports (WT) d'enroulement voisins recevant l'enroulement (W1) du rotor.

7. Moteur à collecteur suivant la revendication 6, caractérisé par une configuration du dispositif (WS) de connexion d'âme support d'enroulement. souple radialement, mais rigide dans le sens du pourtour afin de pouvoir obtenir une orientation réciproque entre le conduit (MR) de montage, d'une part, et la fixation du dispositif (WK) de contact du côté de l'enroulement de stator.

8. Moteur à collecteur suivant l'une des revendications 4 à 7, caractérisé par des moyens de contact comportant des poches de réception pour des conducteurs de connexion électrique pouvant être fixés par des techniques de déplacement d'isolant et des moyens de contact enfichables pour un contact mutuel avec une fiche (5) de raccordement extérieure.

9. Moteur à collecteur suivant l'une des revendications 4 à 8, caractérisé par un dispositif (K) de contact et une fiche (S) de raccordement extérieure, qui peut être amenée en contact d'enfichage avec celui-ci, qui comporte un premier plan (S1) de contacts d'enfichage dans la région du support de flasque de la plaque (T) de support et un second plan (S2) de contacts d'enfichage, dans la région du support (WT) d'enroulement comportant un centrage (S3) d'enfichage, disposé au-dessus de lui, avec le conduit (MR) de montage.

10. Moteur à collecteur suivant l'une des revendications 1 à 9. caractérisé par une disposition à grande surface de la plaque (T) de support sur le flasque (L) au moins dans la région des logements (1 ; 1) pour les balais (3 ; 3).

11. Moteur à collecteur suivant l'une des revendications 1 à 10. caractérisé par un dispositif (TG) capteur de vitesse de rotation dans la région de l'extrémité axiale libre du tourillon (LH).

12. Moteur à collecteur suivant l'une des revendications 1 à 11, caractérisé par une ouverture (1.1) de réception dirigée axialement vers l'extérieur, en forme de U et d'une pièce avec la plaque (T) de support pour une cage (2) de balai pouvant être enfoncée dans l'ouverture (1.1) de réception par déformation propre élastique et pouvant être amenée le long du tourillon (LH).

13. Moteur à collecteur suivant la revendication 12, caractérisé par une cage (2) de balai comportant des gradins (2.5;2.6) de surface de poussée à distance du balai (3) guidé, mais qui peuvent cependant être poussés contre des surfaces (1.11;1.12) de poussée du logement (1), de sorte que la cage (2) de balai peut être enfoncée sans gêner le guidage du balai (3) dans le logement (1) de sorte qu'il soit maintenu ajusté serré de manière autonome.
